(19) Europäisches Patentamt / European Patent Office / Office européen des brevets

(11) **EP 4 129 644 A1**

(12) **EUROPEAN PATENT APPLICATION**
published in accordance with Art. 153(4) EPC

(43) Date of publication:
**08.02.2023 Bulletin 2023/06**

(21) Application number: **21779245.6**

(22) Date of filing: **05.03.2021**

(51) International Patent Classification (IPC):
**B32B 5/28** (1968.09)          **B29C 70/16** (1995.01)
**B29C 70/34** (1995.01)          **B32B 27/38** (1968.09)
**C08J 5/24** (1974.07)          **B29K 105/08** (1985.01)

(52) Cooperative Patent Classification (CPC):
**B29C 70/16; B29C 70/34; B32B 5/28; B32B 27/38;**
**C08J 5/24**

(86) International application number:
**PCT/JP2021/008682**

(87) International publication number:
**WO 2021/199906 (07.10.2021 Gazette 2021/40)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **31.03.2020 JP 2020063090**

(71) Applicant: **Toray Industries, Inc.**
**Tokyo 103-8666 (JP)**

(72) Inventors:
• **MISUMI, Jun**
**Iyo-gun, Ehime 791-3193 (JP)**
• **HONMA, Masato**
**Iyo-gun, Ehime 791-3193 (JP)**
• **MATSUBARA, Genki**
**Iyo-gun, Ehime 791-3193 (JP)**
• **SHINOHARA, Kyoko**
**Iyo-gun, Ehime 791-3193 (JP)**

(74) Representative: **Mewburn Ellis LLP**
**Aurora Building**
**Counterslip**
**Bristol BS1 6BX (GB)**

(54) **FIBER-REINFORCED RESIN, INTEGRATED MOLDED ARTICLE AND METHOD FOR PRODUCING FIBER-REINFORCED RESIN**

(57)   The present invention provides a fiber-reinforced resin which has excellent tensile shear joining strength and is able to be integrated with another structural member with high productivity by means of thermal welding, thereby being suitable as a structural material. The present invention is a fiber-reinforced resin which contains constituents (A), (B) and (C), while having a multilayer structure that is composed of a thermosetting resin layer that is formed of (B) a thermosetting resin, a thermoplastic resin layer that is formed of (C) a thermoplastic resin, and a mixed layer that is present between the thermoplastic resin layer and the thermosetting resin layer, while being obtained by mixing the thermoplastic resin (C) and the thermosetting resin (B), in such a manner that the thermoplastic resin layer is present in the surface. With respect to this fiber-reinforced resin, at least some of (A) reinforcing fibers are present in the mixed layer. (A) Reinforcing fibers (B) Thermosetting resin (C) Thermoplastic resin

Figure 1

**Description**

TECHNICAL FIELD

The present invention relates to a fiber-reinforced resin, an integrated product, and a method for producing a fiber-reinforced resin.

BACKGROUND ART

Fiber-reinforced composite materials in which a thermosetting resin or a thermoplastic resin is used as a matrix and is combined with reinforcing fibers such as carbon fibers and glass fibers are lightweight, have excellent mechanical properties such as strength and rigidity, heat resistance, and corrosion resistance, and therefore have been applied to many fields such as aerospace, automobiles, railway vehicles, ships, civil engineering and construction, and sporting goods. These fiber-reinforced composite materials, however, are unsuitable for producing parts or structures having a complicated shape in a single molding process, and in the above applications, it is necessary to produce a member including a fiber-reinforced composite material and then to integrate the member with another member. Mechanical joining methods using bolts, rivets, or screws, and joining methods using an adhesive are used as a method for integrating the fiber-reinforced composite material including the reinforcing fibers and the thermosetting resin with the other member. The mechanical joining method has disadvantages in which a production process is prolonged and a production cost is increased because a process in which a joint is previously processed, such as drilling, is necessary, and the strength of the material is deteriorated because of the drilling. The joining method using the adhesive has disadvantages in which the production process is prolonged because the method requires a bonding process including preparation of an adhesive and coating of the adhesive, and a curing process, and the sufficient reliability in bonding strength cannot be obtained.
To the fiber-reinforced composite material using a thermoplastic resin as a matrix can be applied a method for joining members by welding, in addition to the methods of integrating the fiber-reinforced composite material including the reinforcing fibers and the thermosetting resin with the other member as described above, and thus the time required for joining the members may possibly be shortened. On the other hand, when the mechanical properties in a high temperature and high humidity environment and excellent chemical resistance are required as in structural members for aircrafts, there is a problem of insufficient heat resistance and chemical resistance as compared with the fiber-reinforced composite material including the thermosetting resin and the reinforcing fibers.
Here, Patent Document 1 shows a method for joining a fiber-reinforced composite material including a thermosetting resin and reinforcing fibers through an adhesive.
Patent Document 2 shows a method for integrating a member formed from a thermoplastic resin with a member formed from a fiber-reinforced composite material including a thermosetting resin. That is, a method for obtaining a composite of a thermosetting resin and a thermoplastic resin joined by reinforcing fibers by exposing the reinforcing fibers to a surface of a composite material including the reinforcing fibers and a cured thermosetting resin product and welding the thermoplastic resin is shown.
In addition, Patent Document 3 shows a method for producing a fiber-reinforced resin in which a thermoplastic resin adhesive layer is formed on a surface of a composite material including a thermosetting resin and reinforcing fibers and discloses a method for obtaining thermal weldability of the composite material with the thermoplastic resin interposed therebetween.
Non-Patent Document 1 shows a fiber-reinforced composite material in which a film or a prepreg including a thermoplastic resin compatible with a thermosetting resin is disposed on a surface layer of a prepreg including reinforcing fibers and the thermosetting resin.

PRIOR ART DOCUMENTS

PATENT DOCUMENTS

   Patent Document 1: Japanese Patent Laid-Open Publication No. 2018-161801
   Patent Document 2: Japanese Patent Laid-open Publication No. H04-294128
   Patent Document 3: Japanese Patent No. 3906319

NON-PATENT DOCUMENT

Non-Patent Document 1: Investigation on Energy Director-less Ultrasonic Welding of Polyetherimide (PEI)- to Epoxy-based Composites. (Composites Part B: Engineering Volume 173, 15 September 2019)

SUMMARY OF THE INVENTION

PROBLEMS TO BE SOLVED BY THE INVENTION

However, the technique disclosed in Patent Document 1 is a method of bonding together a fiber-reinforced composite material including reinforcing fibers and a thermosetting resin with an adhesive and has not solved the fundamental problems regarding the prolongation of the production process of the adhesive and the reliability of the adhesive strength.

In the method described in Patent Document 2, a step of exposing a reinforcing fiber portion to the surface of the cured thermosetting resin product after curing the thermosetting resin in the composite is required, and there are many problems in the production stability of this step and the quality stability due to resin deterioration.

In the method described in Patent Document 3, although thermal welding is realized via a thermoplastic resin, the interface between the thermoplastic resin and the thermosetting resin has a weak bonding force, and thus there is a possibility that the interface becomes a defect causing strength reduction depending on the materials to be used.

In Non-Patent Document 1, the thermoplastic resin is formed on the surface of the thermosetting resin, but strength improvement by compatibilization of the thermosetting resin and the thermoplastic resin is limited. High joining strength corresponding to a structural adhesive has not been obtained.

Therefore, an object of the present invention is to provide a fiber-reinforced resin that exhibits excellent joining strength by thermal welding with a member of the same type or a different type.

SOLUTIONS TO THE PROBLEMS

In order to solve such problems, a prepreg of the present invention has the following constitutions. That is, the present invention is a fiber-reinforced resin containing a constituent [A]: a reinforcing fiber; a constituent [B]: a thermosetting resin; and a constituent [C]: a thermoplastic resin, in which the fiber-reinforced resin has a multilayer structure including a thermosetting resin layer containing the thermosetting resin [B], a thermoplastic resin layer containing the thermoplastic resin [C], and a mixed layer that is present between the thermoplastic resin layer and the thermosetting resin layer and containing a mixture of the thermoplastic resin [C] and the thermosetting resin [B], the thermoplastic resin layer being present at a surface, and at least a part of the reinforcing fiber [A] is present in the mixed layer.

EFFECTS OF THE INVENTION

The fiber-reinforced resin of the present invention can be favorably thermally welded to the same or different kind of member, and thus, the time required for the joining process can be shortened and the molding speed of the structural members can be increased, as compared with a conventional fiber-reinforced composite material including a thermosetting resin and reinforcing fibers. An integrated product obtained by joining a fiber-reinforced resin and a member exhibits excellent joining strength, has excellent mechanical properties as a structural material, and can be applied to a wide range of applications such as structural members for aircrafts, structural members for automobiles, and housings for electronic devices, thereby greatly reducing the molding time and molding cost of a product.

BRIEF DESCRIPTION OF THE DRAWINGS

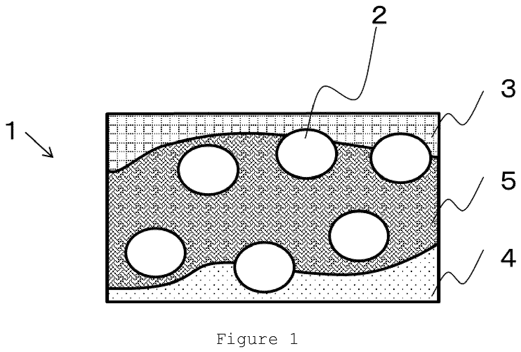

Fig. 1 is a schematic cross-sectional view of the vicinity of a mixed layer of a fiber-reinforced resin according to the present invention.

EMBODIMENTS OF THE INVENTION

Hereinafter, a fiber-reinforced resin of the present invention will be described with reference to the accompanying drawing as appropriate, but the drawing is used for convenience to facilitate understanding of the present invention and do not limit the present invention at all. In the present specification, the cross section of the fiber-reinforced resin refers to a cross section cut in parallel with the thickness direction unless otherwise specified.

<Fiber-Reinforced Resin>

The fiber-reinforced resin of the present invention contains a constituent [A], which is a reinforcing fiber, a constituent [B], which is a thermosetting resin, and a constituent [C], which is a thermoplastic resin, and has a multilayer structure including a thermosetting resin layer containing the thermosetting resin [B], a thermoplastic resin layer containing the thermoplastic resin [C], and a mixed layer that is present between the thermoplastic resin layer and the thermosetting resin layer and containing a mixture of the thermoplastic resin [C] and the thermosetting resin [B], the thermoplastic resin layer being present at a surface, and at least a part of the reinforcing fiber [A] is present in the mixed layer.

Examples of the reinforcing fibers of the constituent [A] used in the present invention, may include glass fibers, carbon fibers, metal fibers, aromatic polyamide fibers, polyaramid fibers, alumina fibers, silicon carbide fibers, boron fibers, and basalt fibers. They may be used alone or in combination of two or more, as appropriate. These reinforcing fibers may be subjected to a surface treatment. Examples of the surface treatment include a metal deposition treatment, a treatment with a coupling agent, a treatment with a sizing agent, and an additive attachment treatment. The reinforcing fibers may include reinforcing fibers having conductivity. As the reinforcing fibers, the carbon fibers are preferably used because of the low specific gravity, high strength, and high elastic modulus.

Examples of commercially available products of the carbon fiber include "TORAYCA (registered trademark)" T800G-24K, "TORAYCA (registered trademark)" T800S-24K, "TORAYCA (registered trademark)" T700G-24K, "TORAYCA (registered trademark)" T700S-24K, "TORAYCA (registered trademark)" T300-3K, and "TORAYCA (registered trademark) " T1100G-24K (they are manufactured by Toray Industries, Inc.).

The form of the reinforcing fibers in the fiber-reinforced resin can be appropriately selected from a form in which reinforcing fiber bundles formed by assembling the reinforcing fibers are arranged in one direction, a form in which the reinforcing fiber bundles arranged in one direction are further laminated, a form of a woven fabric, and the like, and in order to obtain a fiber-reinforced resin that is lightweight and has a higher level of durability, a form of a continuous fiber is preferable such as long fibers (fiber bundles) of the reinforcing fibers arranged in one direction and a woven fabric. In this case, each reinforcing fiber bundle may be composed of a plurality of fibers in the same form or may be composed of a plurality of fibers in different forms. The number of the reinforcing fibers forming one reinforcing fiber bundle is usually 300 to 60,000 and is preferably 300 to 48,000, more preferably 1,000 to 24,000, in consideration of production of a base material. The range may be a combination of any of the above upper limits and any of the lower limits described above.

The reinforcing fibers of the constituent [A] having a strand tensile strength, measured in accordance with the resin-impregnated strand test method of JIS R7608 (2007), of 5.5 GPa or more is preferable, because in such a case a fiber-reinforced resin having the excellent joining strength in addition to the tensile strength can be obtained. The strand tensile strength is more preferably 5.8 GPa or more. The joining strength as used herein refers to a tensile shear joining strength determined in accordance with ISO 4587: 1995 (JIS K6850 (1994)), and an out-of-plane tensile joining strength determined in accordance with ASTM D7291-07.

The thermosetting resin used as the constituent [B] may include, for example, unsaturated polyester resins, vinyl ester resins, epoxy resins, phenol resins, urea resins, melamine resins, polyimide resins, cyanate ester resins, bismaleimide resins, benzoxazine resins, copolymers or modified products thereof, and resins obtained by blending at least two kinds thereof. Of these, the epoxy resins are preferable because of their excellent mechanical properties, the heat resistance, and the adhesiveness to the reinforcing fibers.

In the fiber-reinforced resin of the present invention, the thermosetting resin of the constituent [B] exists as a cured product. When the fiber-reinforced resin is subjected to a differential scanning calorimetry in an inert gas atmosphere, if an area of a peak appearing as an exothermic reaction (residual heat generation) is 50 J/g or less, it can be determined that the thermosetting resin of the constituent [B] is substantially a cured product.

Examples of the main agent of the epoxy resin include bisphenol type epoxy resins such as bisphenol A type epoxy resin, bisphenol F type epoxy resin, bisphenol AD type epoxy resin, and bisphenol S type epoxy resin, brominated epoxy resins such as tetrabromobisphenol A diglycidyl ether, epoxy resins having a biphenyl skeleton, epoxy resins having a naphthalene skeleton, epoxy resins having a dicyclopentadiene skeleton, novolac type epoxy resins such as phenol novolac type epoxy resins and cresol novolac type epoxy resins, glycidyl amine-type epoxy resins such as N,N,O-triglycidyl-m-aminophenol, N,N,O-triglycidyl-p-aminophenol, N,N,O-triglycidyl-4-amino-3-methylphenol, N,N,N',N'-tetraglycidyl-4,4'-methylenedianiline, N,N,N',N'-tetraglycidyl-2,2'-diethyl-4,4'-methylenedianilin e, N,N,N',N'-tetraglycidyl-m-xylylenediamine, N,N-diglycidylaniline, and N,N-diglycidyl-o-toluidine, resorcinol glycidyl ether, and triglycidyl isocyanurate.

Further, when 40 to 100 parts by mass of a glycidyl amine type epoxy resin having 3 or more glycidyl groups based on 100 parts by mass of the all epoxy resins contained in the epoxy resin is contained, a cured product having the high heat resistance can be obtained. Examples of the glycidyl amine type epoxy resin including 3 or more glycidyl groups include N,N,O-triglycidyl-m-aminophenol, N,N,O-triglycidyl-p-aminophenol, N,N,O-triglycidyl-4-amino-3-methylphenol, N,N,N',N'-tetraglycidyl-4,4'-methylenedianiline, N,N,N',N'-tetraglycidyl-2,2'-diethyl-4,4'-methylenedianilin e, and N,N,N',N'-tetraglycidyl-m-xylylenediamine.

In addition, when the thermosetting resin of the constituent [B] is an epoxy resin having any one or more structures of diphenyl ether, diphenylmethane, or 2,2-diphenylpropane, compatibility between the thermosetting resin of the constituent [B] and the thermoplastic resin of the constituent [C] is improved, the strength of the interface between the mixed layer and the thermosetting resin layer is improved, and the joining strength when an integrated product is formed is excellent, which is preferable.

Examples of the epoxy resin having the above structure include diglycidyl ether diphenyl ether having a diphenyl ether structure, a bisphenol F type epoxy resin, a phenol novolac type epoxy resin, a cresol novolac type epoxy resin, N,N,N',N'-tetraglycidyl-4,4'-methylenedianiline, and N,N,N',N'-tetraglycidyl-2,2'-diethyl-4,4'-methylenedianilin e having a diphenylmethane structure, and a bisphenol A type epoxy resin having a 2,2-diphenylpropane structure.

Examples of the curing agent for the epoxy resin include dicyandiamides, aromatic amine compounds, phenol novolac resins, cresol novolac resins, polyphenol compounds, imidazole derivatives, tetramethylguanidine, thiourea-added amines, carboxylic acid hydrazides, carboxylic acid amides, and polymercaptans.

In particular, when the aromatic amine curing agent is used as the curing agent for the epoxy resin, a cured product of the epoxy resin having the good heat resistance can be obtained. Examples of the aromatic amine compound include diaminodiphenyl sulfone, diaminobenzanilide, diaminobenzophenone, diaminodiphenylmethane, isomers thereof, and adducts of aliphatic hydrocarbons and halogen groups.

The thermoplastic resin of the constituent [C] is not particularly limited, and examples thereof include polyester-based resins such as polyethylene terephthalate, polybutylene terephthalate, polytrimethylene terephthalate, polyethylene naphthalate, and liquid crystal polyesters, polyolefins such as polyethylene, polypropylene, and polybutylene, styrene-based resins, urethane resins, polyoxymethylene, polyamides such as polyamide 6 and polyamide 66, polycarbonates, polymethylmethacrylate, polyvinyl chloride, polyphenylene sulfide, polyphenylene ethers, modified polyphenylene ethers, polyimides, polyamideimides, polyetherimide, polysulfones, modified polysulfones, polyethersulfone, polyketones, polyarylene ether ketones such as polyether ketone, polyether ether ketone, and polyether ketone ketone, polyarylate, polyethernitrile, phenol-based resins, and phenoxy resins. These thermoplastic resins may be copolymers or modified products of the above-mentioned resins, and a resin obtained by blending two or more kinds thereof. Among them, polyetherimide, polyethersulfone, and polysulfones are preferable because they have high compatibility with the thermosetting resin, the strength of the interface between the mixed layer and the thermoplastic resin layer is improved, and the joining strength when formed into an integrated product is excellent.

The weight average molecular weight of the thermoplastic resin of the constituent [C] is preferably 10,000 g/mol or more and 40,000 g/mol or less. When the weight average molecular weight is 10,000 g/mol or more, excellent heat resistance and mechanical properties as a thermoplastic resin are exhibited, and therefore excellent joining strength is exhibited at room temperature and in a high-temperature environment. When the weight average molecular weight is 40,000 g/mol or less, compatibility with the thermosetting resin is increased, and interfacial strength between the mixed layer and the thermoplastic resin layer is improved, so that excellent joining strength is exhibited.

The fiber-reinforced resin of the present invention has a multilayer structure including the "thermosetting resin layer" containing the thermosetting resin [B], the "thermoplastic resin layer" containing the thermoplastic resin [C], and the "mixed layer containing a mixture of the thermoplastic resin and the thermosetting resin" present between the thermoplastic resin layer and the thermosetting resin layer such that the thermoplastic resin layer is present at a surface, and at least a part of the reinforcing fibers [A] is present in the mixed layer.

In the present invention, the mixed layer refers to a layer in a state where the thermoplastic resin [C] is mixed with the thermosetting resin [B] before curing, and then the thermosetting resin [B] before curing is cured. The presence of such a mixed layer can be determined by, for example, observing a resin region in the fiber-reinforced resin by microscopic infrared spectroscopy (microscopic IR). For example, in the absorption spectrum obtained by microscopic IR, a peak derived from the thermosetting resin of the constituent [B] and a peak derived from the thermoplastic resin of the constituent [C] are discriminated from each other, and a region where the peaks of the resins are mixed between both the constituents can be defined as a mixed layer. As the peak derived from each resin, it is preferable to select a characteristic peak of each resin, and it is more preferable to avoid a peak commonly possessed by both resins.

Therefore, it is preferable that the thermosetting resin before curing and the thermoplastic resin of the constituent [C] constituting the mixed layer have compatibility, and for example, regarding the Hansen solubility parameter, it is more preferable to select a combination having a relative energy difference number within 1.0. As a specific example, when an epoxy resin is selected as the thermosetting resin of the constituent [B], a polysulfone, polyethersulfone, and polyetherimide can be exemplified as the thermoplastic resin of the constituent [C].

The thickness of the mixed layer is not particularly limited but is preferably 10 $\mu$m to 500 $\mu$m and is preferably 20 $\mu$m to 200 $\mu$m from the viewpoint of securing a stable mixed layer.

In the present invention, at least a part of the reinforcing fibers [A] is present in the mixed layer, so that the mixed layer is reinforced by the reinforcing fibers, and high joining strength is exhibited in the case of thermal welding to another member via the constituent [C]. When the volume fraction of the reinforcing fibers [A] present in the mixed layer is 100 or more and 80% or less, higher joining strength is exhibited, which is preferable. The volume fraction is more preferably 30% or more and 70% or less.

In the present invention, the phrase "reinforcing fibers are present in the mixed layer" means that reinforcing fibers contained in the mixed layer are observed in a cross section perpendicular to the fiber axis direction of the reinforcing fibers of the fiber-reinforced resin.

<Method for Producing Fiber-Reinforced Resin>

The fiber-reinforced resin of the present invention can be produced by a method for producing a fiber-reinforced resin, for example, the method including:

laminating and disposing
a prepreg (1) containing an uncured thermosetting resin and the reinforcing fiber [A],
a prepreg (2) containing a resin mixture of the thermoplastic resin [C] and the uncured thermosetting resin and the reinforcing fiber [A], and
a film (3) containing the thermoplastic resin [C],
so that the film containing the thermoplastic resin [C] is present on a surface; and
curing the uncured thermosetting resin by heating and pressurization to obtain the thermosetting resin [B].

The prepreg (1) containing the uncured thermosetting resin and the reinforcing fibers [A] can be produced by impregnating a reinforcing fiber bundle in which the reinforcing fibers [A] are arranged in one direction or a woven fabric of the reinforcing fibers [A] with an uncured thermosetting resin by a known method. Alternatively, those commercially available as such a prepreg may be used.

The prepreg (2) containing the resin mixture of the thermoplastic resin [C] and the uncured thermosetting resin and the reinforcing fibers [A] can be produced by processing the resin mixture obtained by kneading the thermoplastic resin [C] and the uncured thermosetting resin into a film shape, and then impregnating the resin mixture into the reinforcing fiber bundle in which the reinforcing fibers [A] are arranged in one direction or the woven fabric of the reinforcing fibers [A]. One surface of a prepreg made of the thermosetting resin obtained in the same manner as (1) may be impregnated with the resin mixture, or the reinforcing fibers may be first impregnated with the resin mixture and then impregnated with the uncured thermosetting resin to form a prepreg.

The film (3) containing the thermoplastic resin [C] can be produced by molding the thermoplastic resin [C] into a film shape by a known method, but a commercially available film can also be used.

<Integrated Product>

The fiber-reinforced resin of the present invention can constitute an integrated product with high producibility by thermally welding another member (adherend) with the thermoplastic resin layer of the constituent [C] interposed therebetween. The adherend is not particularly limited as long as it is a member that can be thermally welded to the constituent [C], and examples thereof include a member containing a thermoplastic resin, a metal member having a surface on which a thermoplastic resin is disposed, and a member subjected to fine processing in which a thermoplastic resin intrude into a surface. The adherend may also be the fiber-reinforced resin of the present invention. That is, it is also possible to join the thermoplastic resin layers of the fiber-reinforced resin of the present invention to each other to form an integrated product. The means for thermally welding the fiber-reinforced resin and the adherend together is not particularly limited, and examples thereof include vibration welding, ultrasonic welding, laser welding, resistance welding, induction welding, insert injection molding, and outsert injection molding.

The strength of the joint in the integrated product can be evaluated based on ISO 4587: 1995 (JIS K6850 (1994)) and ASTM D7291-07. The tensile shear joining strength, measured based on ISO 4587: 1995, is preferably 20 MPa or more at a test environment temperature of 23°C, more preferably 25 MPa or more. In applications requiring the mechanical properties in a high temperature environment, it is preferable that the joining strength be 10 MPa or more, more preferably 13 MPa or more at a test environment temperature of 80°C, in an evaluation based on ISO 4587: 1995. The better the integrated product, the higher the tensile shear joining strength, and the upper limit thereof is not particularly limited, and in integrated products of fiber-reinforced resins generally used, the upper limit of the tensile shear joining strength is 200 MPa at a test environment temperature of 23°C or 80°C. In addition, the out-of-plane tensile joining strength, measured based on ASTM D7291-07, is preferably 30 MPa or more, more preferably 35 MPa or more.

EXAMPLES

Hereinafter, the present invention will be described in detail with reference to examples. However, the scope of the present invention is not limited to these examples. The unit "part" of the composition ratio refers to part by mass unless otherwise noted. Measurements of various characteristics were performed under an environment in which a temperature was 23°C and a relative humidity was 50% unless otherwise noted.

<Materials Used in Examples and Comparative Examples>

[Reinforcing Fibers Intended to be Constituent [A]]

T800: Carbon fiber ("TORAYCA (registered trademark)" T800S-24 K, manufactured by Toray Industries, Inc., strand tensile strength: 5.9 GPa)
T700: Carbon fiber ("TORAYCA (registered trademark)" T700S-24 K, manufactured by Toray Industries, Inc., strand tensile strength: 4.9 GPa).

[Epoxy Resin Composition Intended to be Constituent [B] (Thermosetting Resin)]

A kneader was charged with 50 parts by mass of tetraglycidyl diaminodiphenylmethane ("Araldite" (registered trademark) MY 721; Manufactured by Huntsman Advanced Materials; epoxy equivalent: 113 (g/eq.)), 50 parts by mass of a bisphenol A type epoxy resin ("jER" (registered trademark) 825, manufactured by Mitsubishi Chemical Corporation; epoxy equivalent: 175 (g/eq.)), and 45.1 parts by mass of 4,4'-diaminodiphenyl sulfone (SEIKACURE-S, manufactured by Wakayama Seika Kogyo Co., Ltd.) as a curing agent, and the resulting mixture was heated and kneaded at a temperature of 100°C or lower to obtain an epoxy resin composition B-1.

A kneader was charged with 100 parts by mass of a biphenyl epoxy resin ("jER" (registered trademark) YX4000, manufactured by Mitsubishi Chemical Corporation; epoxy equivalent: 186 (g/eq.)) and 33.3 parts by mass of 4,4'-diaminodiphenyl sulfone (SEIKACURE-S, manufactured by Wakayama Seika Kogyo Co., Ltd.) as a curing agent, and the resulting mixture was heated and kneaded at a temperature of 100°C or lower to obtain an epoxy resin composition B-2.

[Thermoplastic Resin Layer]

A thermoplastic resin intended to be the following constituent [C] was melt-cast and processed into a film having a thickness of 50 $\mu$m.

- PEI: Polyetherimide ("ULTEM" (registered trademark) 1010 manufactured by Saudi Basic Industries Corporation, weight average molecular weight 47,000 g/mol)
- PES1: Polyethersulfone ("SUMIKAEXCEL" (registered trademark) PES 5003P, manufactured by SUMITOMO CHEMICAL COMPANY, LIMITED, weight average molecular weight 47,300 g/mol)
- PES2: polyethersulfone (Virantage 10700RFP, manufactured by Solvay S.A., weight average molecular weight 21,000 g/mol).

[Film Before Curing Intended to be Mixed Layer]

Into a kneader, 50 parts by mass of the epoxy resin composition and 50 parts by mass of the thermoplastic resin were charged in each of the combinations shown in Table 1, and the resulting mixture was heated and kneaded at a temperature of 80°C to obtain a resin mixture. Thereafter, a release paper was coated with the resin mixture with a knife coater to produce each film before curing intended to be the mixed layer.

[Prepreg]

Prepregs were prepared by the following four methods. The constitution of materials used in each example are as shown in Table 1.

Prepreg [I] (thermosetting resin layer) : The epoxy resin composition was coated on a release paper in a resin basis weight of 50 g/m$^2$ using a knife coater to prepare a resin film. This resin film was overlaid on both sides of the reinforcing fibers [A] (basis weight: 193 g/m$^2$) aligned in one direction, and the resulting film was heated and pressurized by using heat rolls to impregnate the reinforcing fibers with the epoxy resin composition, whereby a prepreg [I] was obtained.

Prepreg [II] (mixed layer + thermosetting resin layer): The reinforcing fibers [A] (basis weight: 193 g/m$^2$) aligned in one direction were impregnated from one side with a film (basis weight: 50 g/m$^2$) before curing intended to be the mixed layer while heating and pressurizing, and a resin film (basis weight: 50 g/m$^2$) made of the epoxy resin composition was impregnated from the opposite side to provide a prepreg [II].

Prepreg [III] (mixed layer + thermosetting resin layer): The reinforcing fibers [A] (basis weight: 100 g/m$^2$) aligned in one direction were impregnated from one side with a film (basis weight: 100 g/m$^2$) before curing intended to be the mixed layer while heating and pressurizing, and a resin film (basis weight: 50 g/m$^2$) made of the epoxy resin composition was impregnated from the opposite side to provide a prepreg [III].

Prepreg [IV] (mixed layer + thermosetting resin layer): The reinforcing fibers [A] (basis weight: 50 g/m$^2$) aligned in one direction were impregnated from one side with a film (basis weight: 100 g/m$^2$) before curing intended to be the mixed layer while heating and pressurizing, and a resin film (basis weight: 50 g/m$^2$) made of the epoxy resin composition was impregnated from the opposite side to provide a prepreg [IV].

<Evaluation of Characteristics of Fiber-Reinforced Resin and Integrated Product>

(1) Identification of Mixed Layer

As shown in Fig. 1, the fiber-reinforced resin produced in each of examples and comparative examples was embedded in an embedding resin such that the surface cut perpendicularly to the fiber axis direction of reinforcing fibers 2 was an observation surface, and the observation surface was mirror-polished to produce a cross-sectional sample. As shown in Fig. 1, in the cross-sectional sample (fiber-reinforced resin 1) of the observation target, microscopic IR spectra of a portion (thermoplastic resin layer 3) corresponding to the constituent [C], a portion (thermosetting resin layer 4) corresponding to the constituent [B], and a portion corresponding to a mixed layer 5 were obtained. In the resulting absorption spectrum, among the thermoplastic resins used in the examples and comparative examples, an imide group peak derived from polyetherimide is observed at 1,705 to 1,745 cm$^{-1}$, and a sulfonyl group peak derived from polyethersulfone is observed at 1,280 to 1,380 cm$^{-1}$. These peak heights were compared with the peak height derived from an aromatic ring observed at 1,460 to 1,540 cm$^{-1}$, and when the peak height derived from an aromatic ring was 1, a region where the reference peak height derived from a thermoplastic resin was 0.1 or more and 5.0 or less was determined as the mixed layer.

(2) Method for Measuring Tensile Shear Joining Strength

A tab was bonded to the integrated product produced in each of the examples and comparative examples in accordance with ISO 4587: 1995 (JIS K6850 (1994)), and it was cut into a piece having a width of 25 mm to obtain a desired test piece. The obtained test piece was dried in a vacuum oven for 24 hours, the tensile shear joining strength was measured at an environment temperature of 23°C or 80°C based on ISO 4587: 1995 (JIS K6850 (1994)), and evaluation was performed as described below based on the measurement results.

(a) Tensile Shear Joining Strength at 23°C

28 MPa or more: A
25 MPa or more and less than 28 MPa: B
20 MPa or more and less than 25 MPa: C
Less than 20 MPa: D (failed)

(b) Tensile Shear Joining Strength at 80°C

16 MPa or more: A
13 MPa or more and less than 16 MPa: B
10 MPa or more and less than 13 MPa: C
Less than 10 MPa: D (failed)

(3) Method for Measuring Out-of-plane Tensile Joining Strength

The integrated product produced in each of the examples and comparative examples was ground into a spool shape having an outer diameter of 25 mm, an inner diameter of 19 mm, and a gauge length of 6.4 mm to obtain a desired test piece. The obtained test piece was dried in a vacuum oven for 24 hours, the out-of-plane tensile joining strength was measured based on ASTM D7291-07, and the evaluation was performed based on the measurement results as follows:

40 MPa or more: A
35 MPa or more and less than 40 MPa: B
30 MPa or more and less than 35 MPa: C
Less than 30 MPa: D (failed).

(4) Method for Measuring Thickness of Mixed Layer

For the mixed layer region determined in (1), the distance between the boundary line between the regions 3 and 5 and the boundary line between the regions 4 and 5 shown in Fig. 1 was measured at 100 points every 5 μm, and the average value thereof was calculated as the thickness of the mixed layer.

(5) Method for Measuring Volume Fraction of Reinforcing Fibers

In an arbitrary observation range of 100 μm square in the cross-sectional sample prepared in (1), the mixed layer region was specified by the method of (1), the areas of both regions were determined by binarizing the reinforcing fibers and the mixed layer region, and the volume fraction of the reinforcing fibers was calculated by the following formula.

$$\text{Volume fraction of reinforcing fiber} = \text{area of reinforcing fibers}/(\text{area of reinforcing fibers} + \text{area of mixed layer region})$$

<Examples and Comparative Examples>

[Examples 1 to 5]

Six sheets of the prepreg [I] cut into a predetermined size and two sheets of the prepreg [II] cut into a similar shape were prepared, so that a total of eight sheets of prepregs were prepared. The prepreg sheets were laminated so that the outermost layers were constituted of the prepreg [II] in a configuration of $[0°/90°]_{2s}$ (symbol s indicates mirror symmetry), defining that the axial direction of reinforcing fibers was 0° and the axial orthogonal direction was 90°. Here, the sheets of the prepreg [II] were laminated so that the resin composition intended to be the mixed layers constitute the outermost surfaces. Thermoplastic resin films were laminated on both outermost surfaces. This laminate was set in a press molding die, a pressure of 0.6 MPa was applied using a press machine while maintaining this shape, and the laminate was heated at 180°C for 120 minutes to obtain a fiber-reinforced resin for evaluation of tensile shear Joining strength. The existence position of the constituent [C] is on the surface of the fiber-reinforced resin.
The produced fiber-reinforced resin was cut into 2 panels, having sizes of a width of 250 mm and a length of 92.5 mm, in which the axial direction (0° direction) of the reinforcing fibers was the length direction of the test piece, and the panels were dried in a vacuum oven for 24 hours. Thereafter, the 2 panels were superposed so that a range of 12.5 mm in length from the end portions of the 2 panels was a joint surface with the 0° direction as the length direction, and the panels were held for 1 minute at 290°C and a pressure of 3 MPa to weld the superposed surfaces, thereby obtaining an integrated product for evaluation of tensile shear joining strength.
A total of 75 sheets of prepregs consisting of 73 sheets of the prepreg [I] cut into a predetermined size and 2 sheets of the prepreg [II] cut into a similar shape were prepared. A total of 75 sheets were laminated so that the reinforcing fibers were aligned in the same direction, and the prepregs were laminated so that the outermost layers were constituted of the prepreg [II]. Here, the sheets of the prepreg [II] were laminated so that the resin composition intended to be the mixed layers constitute the outermost surfaces. Thermoplastic resin films were laminated on both outermost surfaces. This prepreg laminate was set in a press molding die, a pressure of 0.6 MPa was applied using a press machine while maintaining this shape, and the laminate was heated at 180°C for 120 minutes to obtain a fiber-reinforced resin for evaluation of out-of-plane tensile joining strength and identification of the mixed layer. The existence position of the constituent [C] is on the surface of the fiber-reinforced resin.
The produced fiber-reinforced resin was cut into 2 panels, having a quadrangular shape having a width of 250 mm and a length of 125 mm, in which the axial direction (0° direction) of the reinforcing fibers was the length direction of the test piece, and the panels were dried in a vacuum oven for 24 hours. Thereafter, the two panels were overlaid on each other in the same reinforcing fiber axial direction, a pressure of 3 MPa was applied at 290°C, and it was held for 1 minute to weld the joint surfaces, whereby an integrated product for evaluation of out-of-plane tensile joining strength was obtained. The evaluation results of the physical properties and the like of the fiber-reinforced resins and the integrated products are shown in Table 1.

[Example 6]

A fiber-reinforced resin and an integrated product were produced in the same manner as in Example 1 except that the prepreg [II] was all changed to the prepreg [III]. The evaluation results of the physical properties and the like of the fiber-reinforced resins and the integrated products are shown in Table 1.

[Example 7]

A fiber-reinforced resin and an integrated product were produced in the same manner as in Example 1 except that the prepreg [II] was all changed to the prepreg [IV]. The evaluation results of the physical properties and the like of the fiber-reinforced resins and the integrated products are shown in Table 1.

In Examples 1 to 7, a peak derived from an imide group or a peak derived from a sulfonyl group was strongly observed on the surface of the obtained fiber-reinforced resin, and a peak derived from an imide group or a peak derived from a sulfonyl group was not observed at the central portion where the sheets of the prepreg [I] were laminated. In the vicinity of the outermost layer containing the fiber bundle (corresponding to the outermost layer side of the prepreg [II]), a peak derived from an imide group or a peak derived from a sulfonyl group was observed, but the height thereof was almost the same as that of the peak derived from an aromatic ring, and the relative height was lower than that of the observation result on the surface. Therefore, it was confirmed that the thermosetting resin and the thermoplastic resin were mixed.

[Comparative Example 1]

A fiber-reinforced resin and an integrated product were produced in the same manner as in Example 1 except that the prepreg [II] was all changed to the prepreg [I] in Example 1. The evaluation results of the physical properties and the like of the fiber-reinforced resins and the integrated products are shown in Table 1.

In the vicinity of the outermost layer containing the fiber bundle of the obtained fiber-reinforced resin, a peak derived from an imide group or a peak derived from a sulfonyl group was not observed, and the mixed layer containing the reinforcing fibers could not be observed. The obtained fiber-reinforced resin had a tensile shear joining strength of 4 MPa and was easily decomposed so that the film of the thermoplastic resin was peeled off.

[Comparative Example 2]

In Comparative Example 1, films before curing (basis weight: 50 g/m$^2$) intended to be the mixed layers were attached to both sides of a prepreg (all [I]) laminate, and thermoplastic resin films were further laminated on both sides. A fiber-reinforced resin was produced from this laminate in the same manner as in Example 1. The evaluation results of the physical properties and the like of the fiber-reinforced resins and the integrated products are shown in Table 1.

In the vicinity of the outermost layer containing the fiber bundle of the obtained fiber-reinforced resin, a peak derived from an imide group or a peak derived from a sulfonyl group was not observed, and the mixed layer containing the reinforcing fibers could not be observed. The obtained fiber-reinforced resin had a tensile shear joining strength of 12 MPa, was broken at the mixed layer portion, and exhibited joining strength comparable to that of a general adhesive, but the strength was insufficient as structural adhesion.

[Table 1]

| | | Example 1 | Example 2 | Example 3 | Example 4 | Example 5 | Example 6 | Example 7 | Comparative Example 1 | Comparative Example 2 |
|---|---|---|---|---|---|---|---|---|---|---|
| Thermosetting resin layer (before curing) | Epoxy resin composition | B-1 | B-2 | B-1 | B-1 | B-1 | B-1 | B-1 | B-1 | B-1 |
| Mixed layer (before curing) | Epoxy resin composition | B-1 | B-2 | B-1 | B-1 | B-1 | B-1 | B-1 | - | B-1 |
| | Thermoplastic resin | PEI | PEI | PES1 | PES2 | PEI | PEI | PEI | - | PEI |
| Thermoplastic resin layer present on surface of fiber-reinforced resin | | PEI | PEI | PES1 | PES2 | PEI | PEI | PEI | PEI | PEI |
| Fiber-reinforced resin | Reinforcing fiber | T800S | T800S | T800S | T800S | T700S | T800S | T800S | T800S | T800S |
| | Presence of mixed layer | Present | Present | Present | Present | Present | Present | Present | Absent | Present |
| | Presence of reinforcing fibers in mixed layer | Present | Present | Present | Present | Present | Present | Present | - | Absent |
| | Volume fraction of reinforcing fiber (%) | 57 | 57 | 57 | 57 | 57 | 18 | 32 | - | 0 |
| | Thickness of mixed layer (μm) | 178 | 186 | 183 | 189 | 181 | 145 | 163 | - | 5 |
| Integrated product | Tensile shear joining strength at 23°C (MPa) | A 29.2 | B 27.5 | A 28.2 | A 29.3 | B 27.2 | C 22.3 | B 25.2 | D 4.3 | D 12.1 |
| | Tensile shear joining strength at 80°C (MPa) | A 18.2 | B 15.1 | A 17.1 | A 18.5 | B 14.8 | C 12.2 | B 14.8 | D 2.2 | D 6.3 |
| | Out-of-plane tensile joining strength (MPa) | A 42.4 | B 37.8 | A 40.3 | A 42.7 | B 36.8 | C 33.4 | B 36.2 | D 8.4 | D 19.8 |

From the above results, in the examples, by thermal welding joining for several minutes, it is possible to obtain high joining strength corresponding to structural adhesion. This drastically solves the problem of conventional adhesive bonding that the production process such as a bonding process including preparation of an adhesive and application of an adhesive and a curing process is prolonged. In the fiber-reinforced resin of the present invention, a thermosetting resin and a thermoplastic resin are used, but a mixed layer is formed between both resins, so that a concern about layer separation can be avoided.

DESCRIPTION OF REFERENCE SIGNS

1:    Fiber-reinforced resin
2:    Reinforcing fiber
3:    Thermoplastic resin layer
4:    Thermosetting resin layer
5:    Mixed layer

**Claims**

1.  A fiber-reinforced resin comprising:

    a constituent [A]: a reinforcing fiber;
    a constituent [B]: a thermosetting resin; and
    a constituent [C]: a thermoplastic resin,
    wherein the fiber-reinforced resin has a multilayer structure including:

    a thermosetting resin layer containing the thermosetting resin [B];
    a thermoplastic resin layer containing the thermoplastic resin [C]; and
    a mixed layer that is present between the thermoplastic resin layer and the thermosetting resin layer and containing a mixture of the thermoplastic resin [C] and the thermosetting resin [B],
    the thermoplastic resin layer being present at a surface, and
    at least a part of the reinforcing fiber [A] is present in the mixed layer.

2.  The fiber-reinforced resin according to claim 1, wherein a thickness of the mixed layer in which the reinforcing fiber [A] is present is 20 $\mu$m to 200 $\mu$m.

3.  The fiber-reinforced resin according to claim 1 or 2, wherein the thermosetting resin [B] is an epoxy resin.

4.  The fiber-reinforced resin according to any one of claims 1 to 3, wherein the thermoplastic resin [C] is a resin selected from the group consisting of polysulfone, polyethersulfone, and polyetherimide.

5.  The fiber-reinforced resin according to claim 3, wherein the epoxy resin contains an epoxy resin having any one or more structures of diphenyl ether, diphenylmethane, or 2,2-diphenylpropane.

6.  The fiber-reinforced resin according to any one of claims 1 to 5, wherein a volume fraction of the reinforcing fiber [A] present in the mixed layer is 10% or more and 80% or less.

7.  The fiber-reinforced resin according to any one of claims 1 to 6, wherein the thermoplastic resin [C] has a weight average molecular weight of 10,000 g/mol or more and 40,000 g/mol or less.

8.  The fiber-reinforced resin according to any one of claims 1 to 7, wherein the reinforcing fiber [A] is arranged in one direction, or the reinforcing fiber [A] is a woven fabric.

9.  The fiber-reinforced resin according to any one of claims 1 to 8, wherein the reinforcing fiber [A] has a strand tensile strength of 5.5 GPa or more.

10. An integrated product comprising the fiber-reinforced resin according to any one of claims 1 to 9 welded to another member via the thermoplastic resin layer.

11. A method for producing a fiber-reinforced resin, comprising:

laminating and disposing
a prepreg (1) containing an uncured thermosetting resin and a reinforcing fiber [A],
a prepreg (2) containing a resin mixture of a thermoplastic resin [C] and an uncured thermosetting resin and the reinforcing fiber [A], and
a film (3) containing a thermoplastic resin [C],
so that the film containing the thermoplastic resin [C] is present on a surface; and
curing the uncured thermosetting resin by heating and pressurization to obtain a thermosetting resin [B].

Figure 1

**INTERNATIONAL SEARCH REPORT**

| International application No. |
| --- |
| PCT/JP2021/008682 |

**A. CLASSIFICATION OF SUBJECT MATTER**
Int. Cl. B32B5/28(2006.01)i, B29C70/16(2006.01)i, B29C70/34(2006.01)i,
B32B27/38(2006.01)i, C08J5/24(2006.01)i, B29K105/08(2006.01)n
FI: B32B5/28 A, B29C70/16, B29C70/34, B32B27/38, C08J5/24 CFC, B29K105:08

According to International Patent Classification (IPC) or to both national classification and IPC

**B. FIELDS SEARCHED**

Minimum documentation searched (classification system followed by classification symbols)
Int. Cl. B32B1/00-43/00, C08J5/04-5/10, 5/24, B29B11/16, 15/08-15/14,
B29C41/00-41/36, 41/46-41/52, 70/00-70/88

Documentation searched other than minimum documentation to the extent that such documents are included in the fields searched
Published examined utility model applications of Japan    1922-1996
Published unexamined utility model applications of Japan  1971-2021
Registered utility model specifications of Japan          1996-2021
Published registered utility model applications of Japan  1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2004/060658 A1 (TORAY INDUSTRIES, INC.) 22 July 2004, claims 1, 2, 12, 14, 16, p. 49, line 20 to p. 50, line 20, examples | 1-10 |
| A | | 11 |
| X | JP 2006-198784 A (TORAY INDUSTRIES, INC.) 03 August 2006, claims 1, 3, 4, 10, paragraph [0010] | 1-10 |
| A | | 11 |
| A | WO 2008/013094 A1 (TORAY INDUSTRIES, INC.) 31 January 2008, paragraphs [0115]-[0180], examples | 1-11 |
| A | JP 2011-516712 A (HEXCEL COMPOSITES, LTD.) 26 May 2011, claims 1-3, 5, 11 | 1-11 |
| A | JP 7-53741 A (TORAY INDUSTRIES, INC.) 28 February 1995, claims 1, 3, 4, 10 | 1-11 |

☒ Further documents are listed in the continuation of Box C.    ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 31.03.2021 | 13.04.2021 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/008682 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2013-531707 A (HEXCEL COMPOSITES, LTD.) 08 August 2013, claims 1, 2, 4, 7, 9 | 1-11 |

Form PCT/ISA/210 (continuation of second sheet) (January 2015)

**INTERNATIONAL SEARCH REPORT**

Information on patent family members

| International application No. |
| --- |
| PCT/JP2021/008682 |

| Patent Documents referred to in the Report | Publication Date | Patent Family | Publication Date |
| --- | --- | --- | --- |
| WO 2004/060658 A1 | 22.07.2004 | US 2006/0110599 A1<br>claims 1, 2, 12, 14,<br>16, paragraphs<br>[0202]-[0206],<br>examples<br>EP 1593491 A1<br>CN 1732083 A<br>KR 10-2010-0018097 A | |
| JP 2006-198784 A | 03.08.2006 | (Family: none) | |
| WO 2008/013094 A1 | 31.01.2008 | US 2009/0208721 A1<br>paragraphs [0154]-<br>[0225], examples<br>EP 2047983 A1<br>CN 101495307 A<br>KR 10-2009-0033440 A | |
| JP 2011-516712 A | 26.05.2011 | US 2011/0034591 A1<br>claims 1-3, 5, 11<br>WO 2009/127891 A1<br>EP 2265658 A1 | |
| JP 7-53741 A | 28.02.1995 | (Family: none) | |
| JP 2013-531707 A | 08.08.2013 | US 2013/0065471 A1<br>claims 1, 2, 4, 7, 9<br>WO 2011/148237 A1<br>EP 2576671 A1<br>CN 103025804 A | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018161801 A
- JP H04294128 A

- JP 3906319 B

**Non-patent literature cited in the description**

- Investigation on Energy Director-less Ultrasonic Welding of Polyetherimide (PEI)- to Epoxy-based Composites. *Composites Part B: Engineering,* 15 September 2019, vol. 173